# DEMANDE DE BREVET EUROPEEN

(11) **EP 1 265 056 A1**
(43) Date de publication de la demande: **11.12.2002**
(21) Numéro de dépôt: 02291265.3
(22) Date de dépôt: 22.05.2002
(51) Int. Cl.: G01F 15/18

(54) **Système de fixation d'un module amovible sur des circuits avec verrouillage par guillotine**

(30) Priorité: 22.05.2001 FR 0106753
(71) Demandeur: Sainte-Lizaigne S.A., 92800 Puteaux (FR); Manufacture D'Appareillage Electrique de Cahors - MAEC, 46000 Cahors (FR)
(72) Inventeur: Murias, Lionel, 36100 Issoudun (FR); Verhee, Damien, 36100 Issoudun (FR); Guiomar, Yann, 31700 Mondonville (FR); Charles, Jérôme, 46000 Cahors (FR)
(74) Mandataire: Catherine, Alain

(57) **Abrégé**

L'invention concerne un système de fixation sur une base (2) d'un module amovible (1) comportant au moins deux extrémités (11,12) sur des circuits se terminant par des mamelons (21,22), la base comportant un support (20) maintenant lesdits mamelons, le module étant fixé d'une manière amovible sur la base par un moyen de fixation mobile à au moins une position de verrouillage et une position de libération, l'extrémité et le mamelon correspondant s'interpénétrant. Selon l'invention, le moyen de fixation mobile est une guillotine comportant un tiroir (3) mobile en translation par au moins un bord latéral dans un guide (29) du support, le tiroir comportant au moins un bord de verrouillage (30) par mamelon et extrémité s'interpénétrant, le bord de verrouillage s'engageant dans une rainure débouchante (13) et une gorge (23) en alignements dans l'épaisseur de l'extrémité et du mamelon afin de les bloquer entre eux en position de verrouillage. Elle est applicable à des circuits de fluides ou électriques. Le module peut être un ensemble de comptage amovible.

## Description

La présente invention concerne un système permettant la fixation d'un module amovible sur des circuits avec un verrouillage du module aux circuits par une guillotine. Elle est particulièrement, mais pas limitativement, adaptée aux ensembles de comptage amovible sur circuits fluidiques ou électriques ou mixtes. Elle peut être mise en oeuvre dans les réseaux de distribution de fluides et plus particulièrement de l'eau vers des abonnés.

Les ensembles de comptage de distribution d'eau sont des dispositifs destinés à comptabiliser l'eau consommée par un abonné et sont en général dotés d'éléments de robinetterie nécessaires à l'utilisation correcte du circuit, à savoir un robinet avant compteur, un clapet anti-retour et le compteur. Les ensembles de comptage peuvent être installés dans les habitations, ils sont alors en général à l'air libre et d'un accès relativement aisé, ou à l'extérieur et, alors, en général, dans un regard ou une borne de comptage enfoui tout ou partie dans le sol afin de les protéger des effets du gel où ils sont d'un accès plus difficile. Le robinet avant compteur est destiné à l'interruption de l'eau soit par l'abonné dans le cas d'une absence prolongée, d'une fuite dans le circuit etc., soit par le distributeur d'eau lors du remplacement du compteur ou d'une intervention sur la robinetterie après compteur. Dans le cas d'un regard de comptage, il est fréquent que l'abonné dispose en plus d'un robinet à l'entrée de l'habitation pour réaliser l'arrêt d'eau, le robinet avant compteur n'est alors utilisé que par le distributeur pour le remplacement du compteur hors d'eau. Le clapet anti-retour est destiné à éviter les retours d'eau du circuit abonné vers le circuit de distribution lors d'une chute de pression relative du réseau. L'ensemble de comptage peut, en outre, comporter un robinet après compteur.

Dans les systèmes couramment utilisés, l'ensemble de comptage est constitué d'un rail ou support rigidifiant l'ensemble et relié aux extrémités d'entrée ou amont et de sortie ou aval de l'ensemble de comptage et d'éléments de robinetterie liés entre eux par des systèmes à écrous tournants assemblés sur des filetages. Les étanchéités sont en général réalisées par des joints plats, positionnés entre les portées des organes à assembler et comprimés par le serrage. On doit noter que ce type de joint plat nécessite un remplacement lors de chaque démontage.

Il est nécessaire de pouvoir intervenir sur chacun de ces éléments, dans un but de vérification ou de remplacement durant la période de mise en oeuvre. Les interventions sont, par ordre de fréquence, un relevé du compteur, un remplacement du compteur, une vérification ou remplacement du clapet, un remplacement du robinet avant compteur. Si ces interventions sont faites hors d'eau grâce à la fermeture du robinet avant compteur, il n'en est évidemment pas de même pour le remplacement du robinet avant-compteur qui nécessite une coupure d'eau en amont de l'ensemble de comptage.

Par ailleurs, ces interventions nécessitent un arrêt d'eau chez l'abonné et l'utilisation d'outils dans un environnement en général très exiguë. Une telle intervention est donc assez longue et délicate et implique une coupure d'eau prolongée pour l'abonné qui doit bénéficier d'une information de préavis d'arrêt.

Les problèmes qui se posent dans la distribution d'eau se retrouvent également dans le cas de la distribution d'autres fluides ou de l'électricité et même des circuits de télécommunication. En effet, les moyens de comptage proprement dit ou autres moyens fonctionnels devant être connectés sur les circuits sont généralement disposés dans des emplacements difficiles d'accès et lorsqu'une intervention doit être réalisée cette dernière est généralement longue et complexe avec des outils spécifiques ce qui entraîne une gène importante pour les abonnés ou utilisateurs et un coût de maintenance important.

Une mise en oeuvre modulaire a donc été proposée comme dans les demandes FR 2 798 182 et FR 2 800 401 concernant la distribution de l'eau et qui décrivent des systèmes à rails de comptage amovibles avec dispositif d'accroche qui permettent de résoudre une partie des inconvénients mentionnés ci-dessus car il suffit d'intervenir sur des modules verrouillés dont l'échange est relativement rapide. En particulier, l'ensemble et le moyen de verrouillage qui y sont décrit permettent une réduction du temps d'intervention et l'arrêt d'eau par des obturateurs amont et aval est automatiquement commandé par le retrait du module amovible.

Malgré ces avantages, ces dispositifs présentent encore quelques inconvénients et sont encore relativement volumineux, le moyen de verrouillage étant à bascule et agissant latéralement. Premièrement, l'effort à vaincre lors de la mise en place de l'ensemble de comptage est lié au carré du diamètre de passage des obturateurs amont et aval. Cela entraîne l'adoption d'un diamètre de passage réduit, afin de permettre la mise en place sous pression du circuit amont avec pour conséquence des pertes de charge d'un niveau élevé. On peut noter que cet inconvénient est résolu par le système décrit dans la seconde demande de brevet mentionnée où l'organe d'obturation du robinet avant-compteur est commun à l'obturateur amont et commandé par la manoeuvre du robinet avant compteur, permettant ainsi le retrait et la mise en place hors d'eau. Deuxièmement, la mise en place correcte de l'ensemble de comptage nécessite un alignement parfait des axes d'écoulement entre le module amovible, l'ensemble de comptage en l'espèce, et la partie fixe. Cela impose donc l'utilisation d'un rail de comptage ou un élément rigidifiant l'ensemble de comptage. Troisièmement, le système est relativement complexe et constitué d'un nombre élevé de composants et d'étanchéités, ce qui implique un coût de revient plus élevé et augmente les risques de défaillance. Quatrièmement, dans le cas d'une défaillance de l'un des obturateurs, l'intervention de réparation ou remplacement est délicate et nécessite un arrêt d'eau en amont.

Le but de l'invention est donc de proposer un système qui permette de résoudre ces problèmes de raccordement tout en bénéficiant des avantages de l'utilisation d'un module amovible.

Dans sa généralité, l'invention concerne donc un système de fixation sur une base d'un module amovible comportant au moins deux extrémités sur des mamelons terminant des circuits, la base comportant un support maintenant lesdits mamelons, le module étant fixé d'une manière amovible sur la base par un moyen de fixation mobile à au moins une position de verrouillage et une position de libération, l'extrémité et le mamelon correspondant s'interpénétrant.

Le terme interpénétration signifie que le mamelon vient en recouvrement de l'extrémité ou que, inversement, l'extrémité vient en recouvrement du mamelon.

Selon l'invention, le moyen de fixation mobile est une guillotine comportant un tiroir mobile en translation par au moins un bord latéral dans un guide du support, le tiroir comportant au moins un bord de verrouillage par mamelon et extrémité s'interpénétrant, le bord de verrouillage s'engageant dans une rainure débouchante et une gorge en alignements dans l'épaisseur de l'extrémité et du mamelon afin de les bloquer entre eux en position de verrouillage.

Les moyens de verrouillage du module sont donc simplifiés par la mise en oeuvre d'un montage à guillotine agissant directement sur les extrémités devant être raccordées ce qui supprime l'obligation de rigidification par rail ou autre du module amovible et qui peut éventuellement comporter un moyen de détrompage.

Dans divers modes de mise en oeuvre de l'invention dans sa généralité, les moyens suivants pouvant être combinés selon toutes les possibilités de réalisations techniques, sont employés :
- le tiroir est une plaque,
- le tiroir comporte un moyen de préhension permettant à un opérateur de la déplacer manuellement en translation,
- le tiroir comporte une encoche le long d'un bord latéral, le support comporte un orifice d'engagement borgne d'une clé de manoeuvre à doigt de manoeuvre, le doigt s'engageant dans l'encoche et provoquant la translation du tiroir lors de la rotation de la clé,
- le tiroir est une plaque comportant une encoche le long d'un bord latéral, le support comporte un orifice d'engagement borgne d'une clé de manoeuvre à doigt de manoeuvre, le doigt s'engageant dans l'encoche et provoquant la translation du tiroir lors de la rotation de la clé,
- le tiroir est mobile en translation par deux bords latéraux opposés dans deux guides du support et le tiroir comporte une rainure à chacune de deux extrémités opposées libres, chacune des rainures comportant deux bords de verrouillage opposés, une des rainures vers l'intérieur du tiroir dans le sens du verrouillage débouchant dans un orifice permettant en position de libération le libre passage de l'extrémité adaptée,
- le tiroir est amovible et comporte des ergots sur ses bords latéraux, les guides de glissière comportent des échancrures, et, pour séparation les ergots étant amenés en rapport avec les échancrures,
- les extrémités et les mamelons sont des éléments rapportés,
- dans le cas de câbles électriques les éléments rapportés sont sertis sur l'enveloppe du câble,
- l'extrémité du module qui n'est pas destinée à traverser l'orifice comporte une collerette de détrompage externe.

L'invention est également applicable à un système dont le module est un ensemble de comptage amovible à circuit fluidique et comportant d'une part une base avec un support, un mamelon de raccordement d'amont, un mamelon de raccordement d'aval et, d'autre part, l'ensemble de comptage, les deux mamelons étant maintenus par le support, l'ensemble de comptage par une extrémité amont et une extrémité aval étant raccordé d'une manière étanche sur respectivement le mamelon amont et le mamelon aval, l'ensemble de comptage étant en outre fixé d'une manière amovible sur la base par un moyen de fixation mobile à au moins une position de verrouillage et une position de libération, les extrémités et les mamelons s'interpénétrant.

Selon l'invention, l'une ou plusieurs des caractéristiques précédemment listées sont mises en oeuvre.

Le moyen de fixation mobile est donc une guillotine comportant un tiroir ou plaque mobile en translation par au moins un bord latéral dans un guide du support, le tiroir comportant au moins un bord de verrouillage s'engageant dans une rainure débouchante et une gorge en alignement dans l'épaisseur de l'extrémité et du mamelon afin de les bloquer entre eux en position de verrouillage.

Dans divers modes de mise en oeuvre de l'invention, les moyens suivants pouvant être combinés selon toutes les possibilités de réalisations techniques, sont employés :
- les extrémités amont et aval de l'ensemble de comptage sont du type femelle et viennent en recouvrement des mamelons correspondant du type mâle, les extrémités comportent les rainures débouchantes, les mamelons comportent les gorges et, en position de verrouillage, les rainures et les gorges étant alignées et les bords de verrouillage du tiroir s'y engageant afin de bloquer les mamelons dans les extrémités,
- l'extrémité du mamelon du type mâle est chanfreinée afin de faciliter son introduction dans l'extrémité correspondante du type femelle de l'ensemble de comptage,
- les mamelons amont et aval sont du type femelle et viennent en recouvrement des extrémités amont et aval correspondante du type mâle de l'ensemble de comptage, les mamelons comportent des rainures débouchantes, les extrémités comportent des gorges, en position de verrouillage, les rainures et les gorges étant alignées et les bords de verrouillage du tiroir s'y engageant afin de bloquer les extrémités dans les mamelons,
- l'extrémité du type mâle de l'ensemble de comptage est chanfreinée afin de faciliter son introduction dans le mamelon correspondant du type femelle,
- l'extrémité amont est d'un type mâle ou femelle opposé au type de l'extrémité aval,
- le tiroir est mobile en translation par deux bords latéraux opposés dans deux guides du support,
- le tiroir comporte une rainure à chacune de ses deux extrémités opposées libres, chacune des rainures comportant deux bords de verrouillage opposés, une des rainures vers l'intérieur du tiroir dans le sens du verrouillage débouchant dans un orifice permettant en position de libération le libre passage de l'extrémité adaptée,
- l'extrémité du module qui n'est pas destinée à traverser l'orifice comporte une collerette de détrompage externe dont le diamètre est tel que ladite extrémité ne peut passer à travers ledit orifice empêchant ainsi un montage à l'envers du module sur la base,
- le tiroir est amovible et comporte des ergots sur ses bords latéraux, les guides de glissière comportent des échancrures et, pour séparation, les ergots étant amenés en rapport avec les échancrures,
- chacun des mamelons traverse le support dans un orifice de passage correspondant et que le support est formé de deux parties complémentaires solidarisées entre elles et venant au contact l'une de l'autre sensiblement le long d'un plan passant par les orifices de passage des mamelons, les mamelons étant maintenus par un moyen d'empreinte et contre empreinte complémentaires à la surface des orifices et des mamelons, ledit moyen fixant en hauteur le mamelon par rapport au support,
- au moins un mamelon peut être translaté dans le support afin d'adapter la distance entre les mamelons à l'écartement entre les extrémités du module,
- l'orifice de passage correspondant au mamelon qui peut être translaté est oblong et le mamelon correspondant comporte deux zones de méplats latéralement afin que le mamelon soit bloqué en rotation dans l'orifice de passage du support,
- l'orifice de passage qui correspond à un mamelon qui ne peut être translaté et ledit mamelon comportent des moyens de blocage en rotation,
- les moyens de blocage en rotation sont des méplats,
- les moyens de blocage en rotation sont des crantages,
- l'un au moins des mamelons comporte un organe d'obturation pouvant éventuellement être commandés pour ouverture par un moyen de commande de l'ensemble de comptage, ledit organe d'obturation étant normalement fermé lorsque l'ensemble de comptage est séparé de la base,
- l'organe d'obturation au moins en amont est une cartouche démontable comportant un siège et une bille mobile dans une cage, la bille étant d'une densité inférieure à celle du fluide,
- l'organe d'obturation au moins en amont est une cartouche démontable comportant un siège et une bille mobile plaquée contre le siège par un moyen élastique en l'absence d'action du moyen de commande correspondant,
- la cartouche est vissée dans le mamelon et comporte extérieurement un moyen de prise, ledit moyen de prise pouvant être un six pans, et en ce que le mamelon comporte un filetage extérieur pour vissage d'un tube de maintenance étanche à sas, une clé adaptée au moyen de prise et disposée dans le tube de maintenance pouvant dévisser et revisser la cartouche et la cartouche pouvant être extraite et replacée ou remplacée,
- l'organe d'obturation du mamelon amont est commandé par un robinet d'avant compteur de l'ensemble de comptage, ledit robinet comportant un corps de robinet, une came dotée d'au moins une rainure et immobilisée dans le corps de robinet, une goupille circulant dans la rainure et solidaire d'une tige de poussée dont une première extrémité est destinée à agit sur l'organe d'obturation amont et une seconde extrémité comporte un moyen de manoeuvre, une rotation quart de tour du moyen de manoeuvre permettant lorsque l'ensemble de comptage est installé sur la base, l'ouverture ou la fermeture de l'organe d'obturation suivant le sens de rotation,
- le moyen de manoeuvre de la seconde extrémité de la tige de poussée est manoeuvré par une extrémité d'une clé de manoeuvre,
- la rainure comporte au moins deux zones de profil différent afin qu'un utilisateur ait à produire un couple sensiblement constant lors de la rotation,
- l'extrémité aval de l'ensemble de comptage comporte un doigt de commande fixe entraînant l'ouverture de l'organe d'obturation aval lorsque l'ensemble de comptage est installé sur la base,
- le tiroir comporte en outre une encoche le long d'un bord latéral, le support comporte un orifice d'engagement borgne d'une clé de manoeuvre à doigt de manoeuvre, le doigt s'engageant dans l'encoche et provoquant la translation du tiroir lors de la rotation de la clé,
- la clé de manoeuvre est commune au moyen de manoeuvre de la seconde extrémité de la tige de poussée et au tiroir,
- la clé de manoeuvre est un tube carré,
- le système comporte en outre une coque externe destinée à englober le module et comportant à une première extrémité une ouverture d'accès et à une seconde extrémité un fond correspondant à la base,
- l'ensemble de comptage comporte au moins un ou plusieurs des éléments suivants :
   un compteur, un robinet avant compteur, un clapet anti-retour, une purge avant clapet anti-retour, une purge après clapet anti-retour, une prise de dérivation, un moyen de fermeture et blocage des mamelons pour coupure de circuit,
- le système comporte un moyen d'immobilisation du tiroir en position de verrouillage sur le support, ledit moyen étant choisi parmi un verrou, un cadenas, une boucle témoin, un clou à pointe parapluie en matière plastique,
- la boucle témoin est un fil ou collier de plombage,
- le support est en un matériau choisi parmi les matières plastiques, les composites, les métaux et alliages, et préférentiellement en matière plastique,
- le mamelon est en un matériau choisi parmi les métaux ou matières plastiques et préférentiellement en métal cuivreux afin de pouvoir réaliser le mamelon par fonderie ou matriçage,
- de préférence, les rainures débouchantes sont réalisées par moulage sans reprise en usinage,
- le fluide est un liquide ou un gaz,
- le fluide est de l'eau,
- au moins un connecteur électrique à partie mâle et à partie femelle complémentaires est associé au système, les parties mâle et femelle étant reliées lorsque l'ensemble de comptage est disposé sur la base,
- la partie mâle est associée au mamelon et la partie femelle est associée à l'extrémité correspondante,
- la partie femelle est associée au mamelon et la partie mâle est associée à l'extrémité correspondante,
- dans le cas de circuits électriques, un organe d'isolation assure l'isolation électrique lorsque le module amovible est séparé de la base.

Le terme ensemble de comptage n'est pas limitatif et on envisage que le module amovible du système comporte ou non un moyen de comptage proprement dit et qu'il permette ou non la circulation d'un fluide. En effet, l'invention est également applicable à un système formant un " verrou fluidique " fermant et bloquant les orifices des mamelons pour empêcher la circulation du fluide et une éventuelle tentative de fraude par piquage. De même, le terme regard de comptage n'est pas limitatif et l'invention peut être mise en oeuvre sous forme d'un regard, une borne ou simplement libre dans une cave ou autre. Le système peut donc prendre place dans un logement type regard destiné à être enterré, dans une borne (hors sol) ou dans n'importe quelle enceinte ou logement pouvant présenter des contraintes d'encombrement.

Si la présente invention est particulièrement indiquée dans le cadre des opérations de maintenance, elle est également applicable dans un cadre plus général de connexion de circuits à un module qui peut aussi bien un ensemble de comptage que tout autre module, et par exemple un ensemble sanitaire type lavabo ou bidet... avec raccordement d'arrivées d'eau chaude et froide et départ eaux usées éventuellement associé à des raccordements électriques dont prise de terre. Le module peut également être une unité de traitement chimique ou physique d'un fluide pouvant également nécessiter des raccordements électriques comportant une connexion à au minimum deux circuits. Le terme fluide recouvre donc aussi bien un liquide comme de l'eau, que du gaz ou de l'électricité.

L'invention peut également comporter un nombre de mamelons différent du nombre d'extrémités du module amovible, le module pouvant être verrouillé dans des positions différentes et ainsi connecter des mamelons différents en fonction de ces positions.

Grâce à l'invention, le nombre d'éléments ou composants est réduit ainsi que le nombre d'étanchéités ou isolations ce qui réduit les risques de défaillance. Les manipulations sont simplifiées et réduites en nombre pour la mise en oeuvre du système. Les efforts à appliquer sont également réduits et des outils spécifiques ne sont plus indispensables pour assembler certains des éléments. Le coût de revient du système est globalement réduit par l'économie obtenue concernant le système matériel en tant que tel et sa mise en oeuvre par réduction de la durée d'intervention en particulier.

La présente invention est exemplifiée par la description qui suit d'un mode préféré de mise en oeuvre du système concernant la distribution de l'eau et en relation avec les Figures suivantes qui représentent:
Figure 1, une perspective d'un module amovible et d'une base séparés avec leurs éléments dont le tiroir de la guillotine;
Figure 2, une première étape dans la mise en place de l'ensemble de comptage;
Figure 3, une deuxième étape dans la mise en place de l'ensemble de comptage;
Figure 4, une troisième étape de verrouillage de l'ensemble de comptage;
Figures 5 et 6, des étapes de la mise en place et verrouillage de l'ensemble de comptage, support non représenté;
Figures 7 à 10, des vues agrandies partielles de mise en place et verrouillage des mamelons dans les extrémités;
Figure 11, une première vue longitudinale du système avec coupe partielle amont;
Figure 12, une seconde vue transversale du système avec coupe partielle aval;
Figures 13a, 13b, 13c, 13d, 13e, des vues perspectives du robinet avant compteur;
Figure 14, une vue perspective d'un mamelon amont avec son organe d'obturation démonté;
Figure 15, une vue perspective d'un support;
Figure 16, une vue perspective du système avec clé de manoeuvre sur le robinet avant compteur;
Figure 17, une vue d'un outil de remplacement d'un organe d'obturation;
Figures 18, 19 et 20, des étapes du remplacement d'un organe d'obturation par des vues en coupe de l'outil de remplacement;
Figure 21, une vue d'un regard avec le système de fixation;
Figure 22, une application du système de fixation à une connexion électrique.

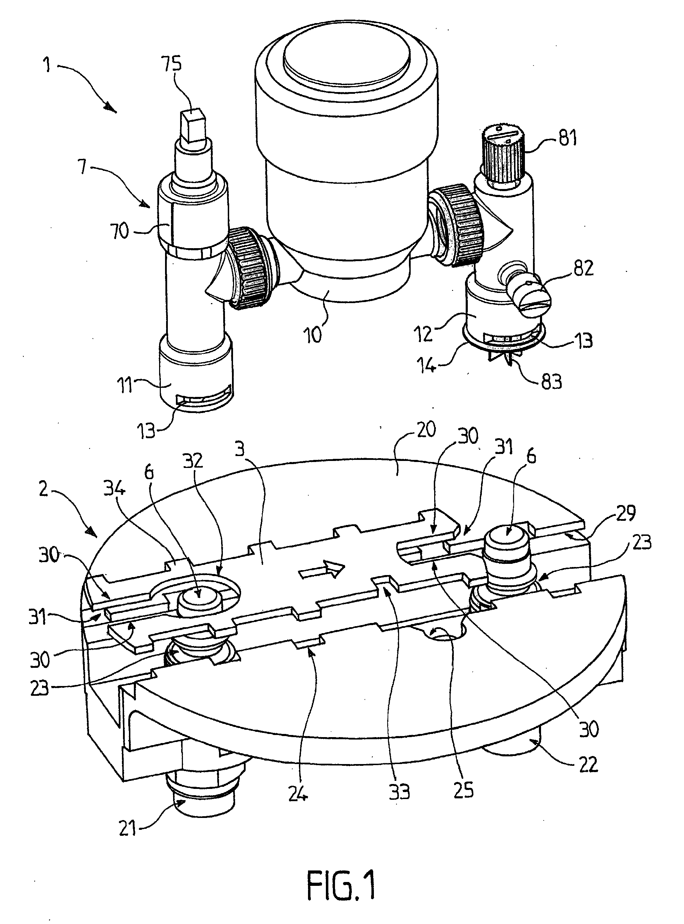

Sur la Figure 1, un module amovible 1 comportant un ensemble de comptage 10 est séparé d'une base 2 comportant un support 20 maintenant un mamelon amont 21 et un mamelon aval 22. L'ensemble de comptage comporte dans le sens d'écoulement normal du fluide, une extrémité amont 11, un robinet avant compteur 7 avec son corps 70 de robinet et son moyen de commande 75 qui est un carré de manoeuvre, un compteur, une première purge 81, un clapet anti-retour 80 interne, une seconde purge 82 et une extrémité aval 12. Ces éléments sont de préférence reliés par un moyen de liaison rapide à bague de crantage permettant un serrage d'étanchéité sans outil spécifique. Dans des variantes de mise en oeuvre, un ou plusieurs des éléments mentionnés sont omis, par exemple une des purges, ou d'autres ajoutés. En particulier, dans le cas où la base 2 ne comporte pas de moyen d'adaptation à l'écartement des extrémités 11, 12 de l'ensemble de comptage 10, ce dernier comporte alors une bague adaptatrice pour que ce soit l'ensemble de comptage qui puisse être adapté à l'écartement des mamelons de la base. Le mamelon d'amont 21 et le mamelon d'aval 22 comportent des organes d'obturation 6 qui sont normalement fermés quand l'ensemble de comptage est séparé de la base. A cette fin, un moyen élastique, ressort par exemple peut agir sur une bille mobile ou la bille être dans un matériau de densité moindre que le fluide. Coté extrémité aval 12, un doigt 83 de commande fixe permet l'ouverture de l'organe d'obturation lorsque l'ensemble de comptage 10 est installé sur la base 2 et donc la purge du circuit aval par la purge 82.

L'ensemble de comptage 10 amovible comprend donc un robinet avant compteur 7 dont l'organe d'obturation est l'obturateur amont. L'obturateur aval peut être commandé par un pousseur ou doigt 83 qui provoque son ouverture à la mise en place du module. Ceci permet de respecter l'usage de la purge 82 (optionnelle) située après la soupape du clapet anti-retour. Cette disposition permet notamment la purge du circuit abonné et la vérification sur site du fonctionnement du clapet. Le raccordement aux conduites d'arrivée ou amont et de départ ou aval d'eau vers l'abonné, se fait directement aux entrée et sortie de l'ensemble de comptage par l'intermédiaire des mamelons 21, 22.

Un moyen de verrouillage à guillotine comportant un tiroir 3 du type plaque ou glissière pouvant être mobilisée en translation dans des guides 29 du support est ici représenté démonté. Le tiroir 3 comporte des ergots 34 pouvant circuler dans les guides 29 et le support comporte des échancrures 24 destinées à permettre la mise en place du tiroir 3 dans les guides 29 du support. Le tiroir comporte à ses deux extrémités des rainures 31 avec une deux bords de verrouillage 30 latéraux opposés et en regard deux à deux. La rainure 31 coté amont débouche vers l'intérieur du tiroir dans un orifice 32 de plus grand diamètre à travers lequel l'extrémité amont 11 peut passer mais pas l'extrémité aval 12 qui comporte une collerette 14 dont le diamètre est supérieur à l'orifice 32 formant ainsi un détrompeur pour le sens de positionnement de l'ensemble de comptage 10. Les corps de la robinetterie dont les extrémités amont et aval sont généralement réalisés en moulage ou matriçage de métaux cuivreux, ensuite usinés. Afin d'optimiser les modes d'obtention, ils pourront être constitués de pièces brutes identiques, différentiées par leur usinage du corps de robinet avant compteur, la collerette sera usinée afin de supprimer le détrompeur.

Dans le cas d'un module amovible qui est fonctionnellement orienté, c'est à dire devant être disposé dans un sens particulier comme par exemple un compteur, le détrompage du sens de positionnement du module amovible 1 est obtenu par mise en oeuvre d'un bossage circulaire brut ou collerette 14, usiné sur l'une des deux extrémités. Ainsi, l'introduction de l'ensemble de comptage 10 à l'envers est impossible, facilitant les manipulations et interdisant la fraude. On envisage cependant d'autres moyens de détrompage. Par exemple, le détrompage est obtenu par la forme différente des liaisons mamelon/extrémité coté amont et coté aval. On réalise, par exemple, un système dans lequel le mamelon amont est femelle, l'extrémité amont étant mâle, et le mamelon aval est mâle, l'extrémité aval étant femelle, ou inversement.

L'invention peut également être mise en oeuvre avec un module amovible qui n'est pas fonctionnellement orienté. Dans ce cas, le/les moyens de détrompage sont omis.

Les positions respectives des ergots 34, échancrures 24, rainures 31 avec bords de verrouillage 30 et de l'orifice 32 permettent un détrompage aussi bien dans le sens de positionnement du tiroir 3 que dans la position de verrouillage, le tiroir ne pouvant être installée dans le support et le verrouillage obtenu que lorsque le montage est correct. Ce procédé permet un montage très simple, réduisant les coûts de fabrication et permet le démontage, nécessaire pour une intervention sur les obturateurs amont ou aval.

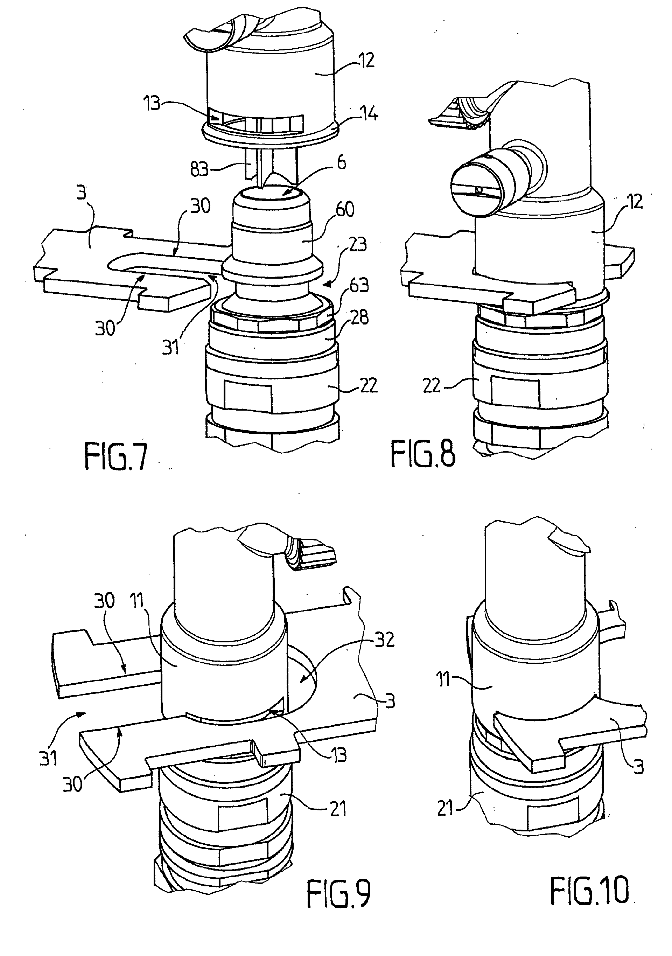

Le tiroir 3 comporte en outre une encoche 33 destinée à recevoir un doigt de manoeuvre 40 d'une clé de manoeuvre 4 se positionnant dans un orifice d'engagement 25 borgne du support. Les bords de verrouillage sont destinés à venir se loger dans des rainures débouchantes 13 d'extrémités 11 et 12 et des gorges 23 de mamelons 21, 22 comme cela est représenté aux Figures 7 à 11 pour obtention du verrouillage de l'ensemble 10 sur la base 2.

Les corps des organes de robinetterie avant compteur et après compteur, qui sont réalisés en fonderie ou matriçage de métal cuivreux sont dotés de lumières latérales ou rainures débouchantes 13, pouvant être obtenues directement par moulage, sans reprise de la pièce en usinage. Ces rainures 13 sont destinées à venir en correspondance d'alignement avec des gorges 23 se trouvant sur les mamelons et permettent le passage des bords de verrouillage 30 de la glissière ou tiroir 3 qui assure par son déplacement longitudinal le blocage et le déblocage de l'ensemble de comptage. Le tiroir 3 est donc doté d'un orifice oblong 32 débouchant vers l'extérieur par une rainure 31 à une première extrémité ainsi qu'une rainure 31 simple à une seconde extrémité. L'introduction de l'ensemble de comptage se fait lorsque l'orifice circulaire du tiroir 3 est concentrique à l'axe de comptage et le blocage est réalisé lorsque les rainures 13 par leurs bords de verrouillage 30 coopèrent avec les gorges 23 des mamelons.

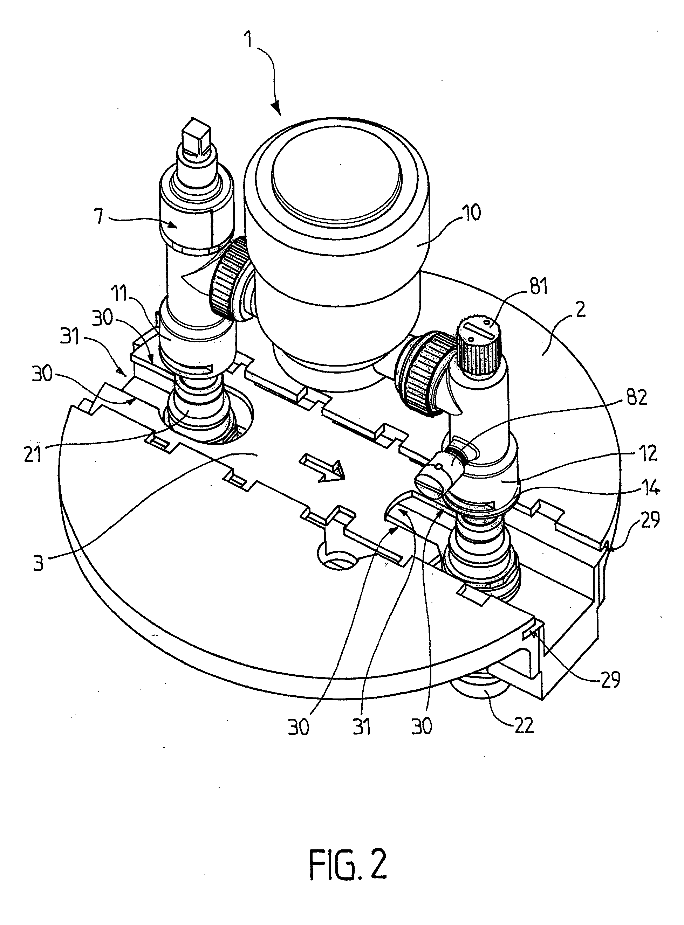

Sur la Figure 2, le tiroir 3 de la guillotine est en place dans le support 20 dans le seul sens possible et l'ensemble de comptage 10 est approché, extrémités 11 et 12 en regard des mamelons 21, 22 respectivement. Le tiroir est en position de déverrouillage, les bords de verrouillage n'étant pas en relation d'engagement avec les mamelons ou extrémités.

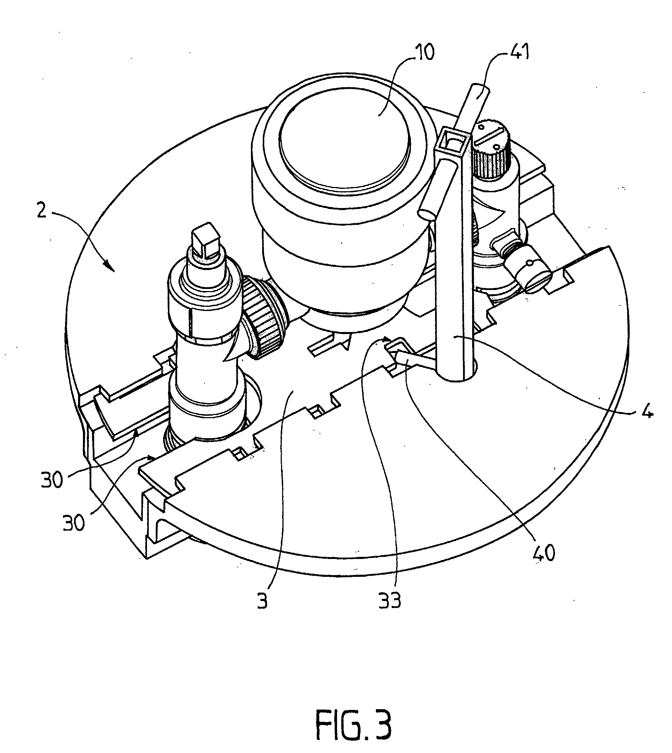

Sur la Figure 3, les extrémités 11 et 12 sont placées en recouvrement des mamelons 21, 22 respectivement. L'opération est facilitée par la forme chanfreinée des mamelons. Le robinet avant compteur étant en position de fermeture, l'effort à fournir est réduit car il correspond essentiellement aux forces de pression et glissement sur les joints toriques destinés à assurer l'étanchéité de la liaison amovible et à l'ouverture de l'organe d'obturation 6 aval par le doigt 83, la contre-pression aval, coté abonné, étant faible voire nulle dans le cas d'une purge préalable au démontage de l'ensemble amovible. La clé 4 avec son té 41 de manoeuvre est introduite dans l'orifice d'engagement 25 et le doigt 40 de manoeuvre est en engagement dans l'encoche 33 du tiroir 3 en position de déverrouillage.

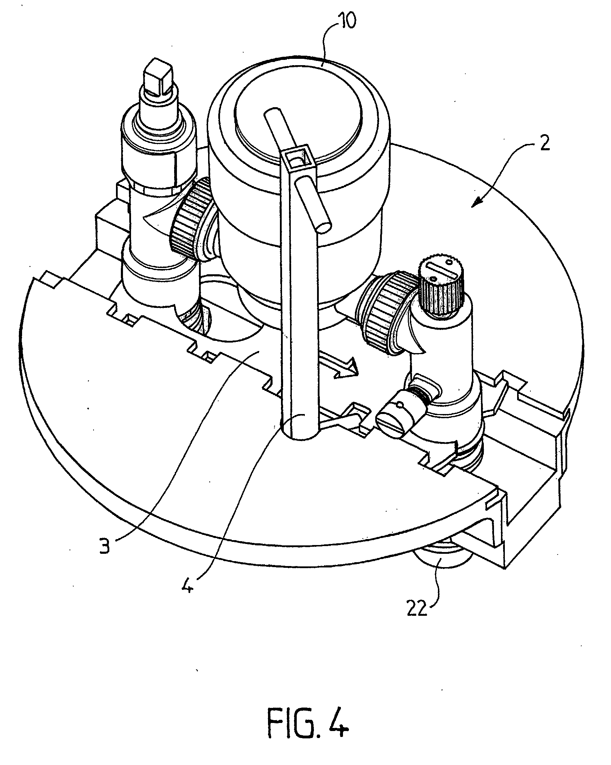

Sur la Figure 4, le tiroir 3 a été amené en position de verrouillage par rotation de la clé de manoeuvre 4 et les bords de verrouillage 30 du tiroir 3 sont en engagement dans les extrémités et les mamelons.

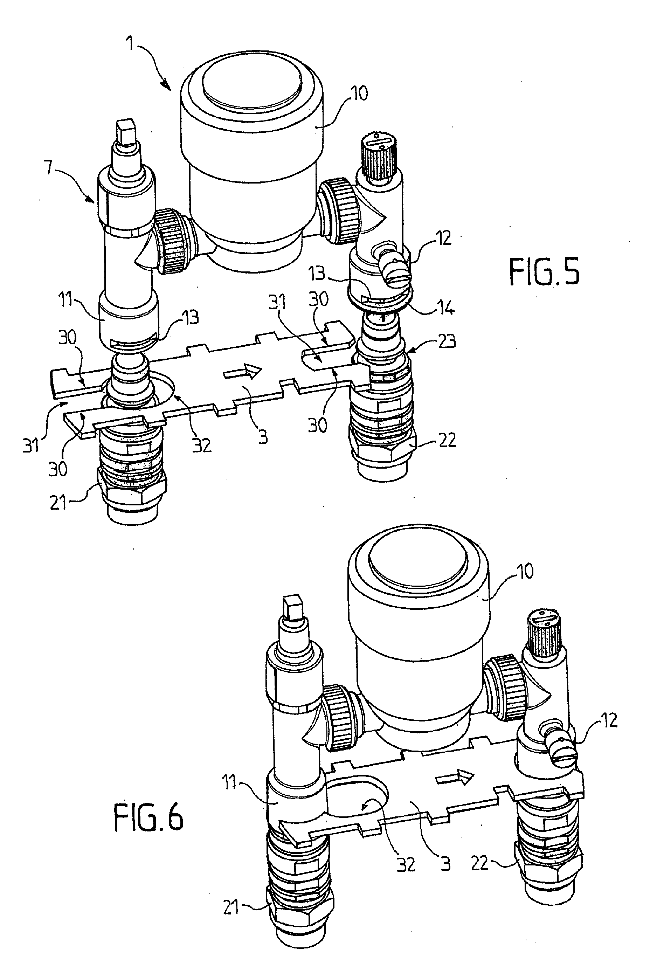

Les Figures 5 et 6 dans lesquelles le support 20 n'a pas été représenté ainsi que les Figures 7 à 10 permettent de mieux visualiser le montage guillotine et les relations entre le tiroir 3, les extrémités 11, 12 avec leurs rainures débouchantes 13 et les mamelons 21, 22 avec leurs gorges 23. Sur ces Figures on peut mieux visualiser le moyen de prise 63 de l'organe d'obturation 6 et le filetage externe 28 du mamelon. L'organe d'obturation est en effet vissé et le moyen de prise en permet le serrage et desserrage. Le filetage externe 28 permet le montage d'un tube étanche à sas pour remplacement de l'organe d'obturation sous charge de fluide. Les mamelons 21 et 22 comportent en outre des zones à méplats permettant leur immobilisation en rotation dans le support 20.

Dans des alternatives de mise en oeuvre, la disposition des bords de verrouillage peut être différente et par exemple un seul bord par rainure et sur l'axe de symétrie du tiroir. Toutefois, l'engagement ne se faisant que d'un seul coté des mamelons et extrémités, le verrouillage est asymétrique. De même, on envisage le cas où ce sont les mamelons qui viennent en recouvrement des extrémités.

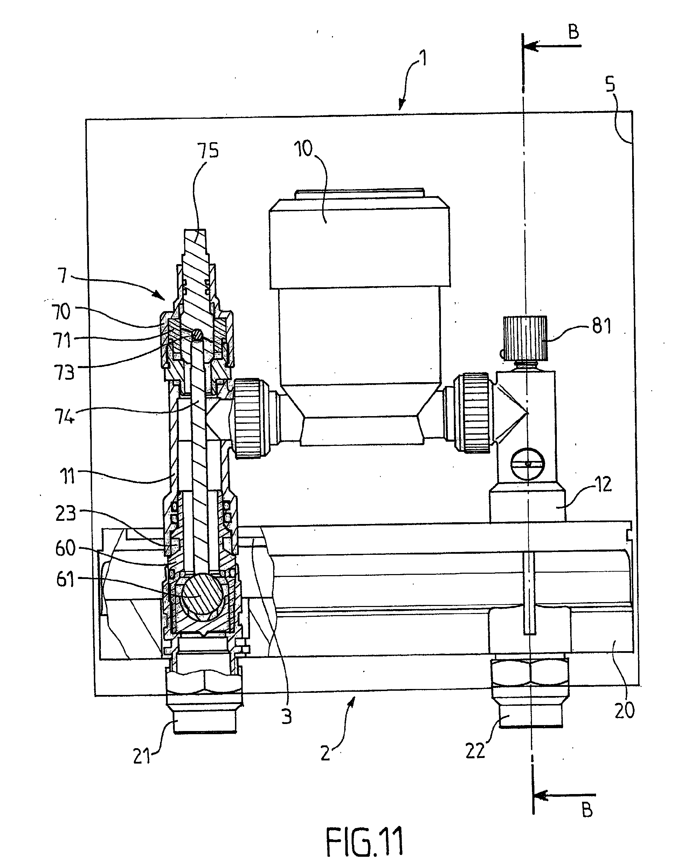

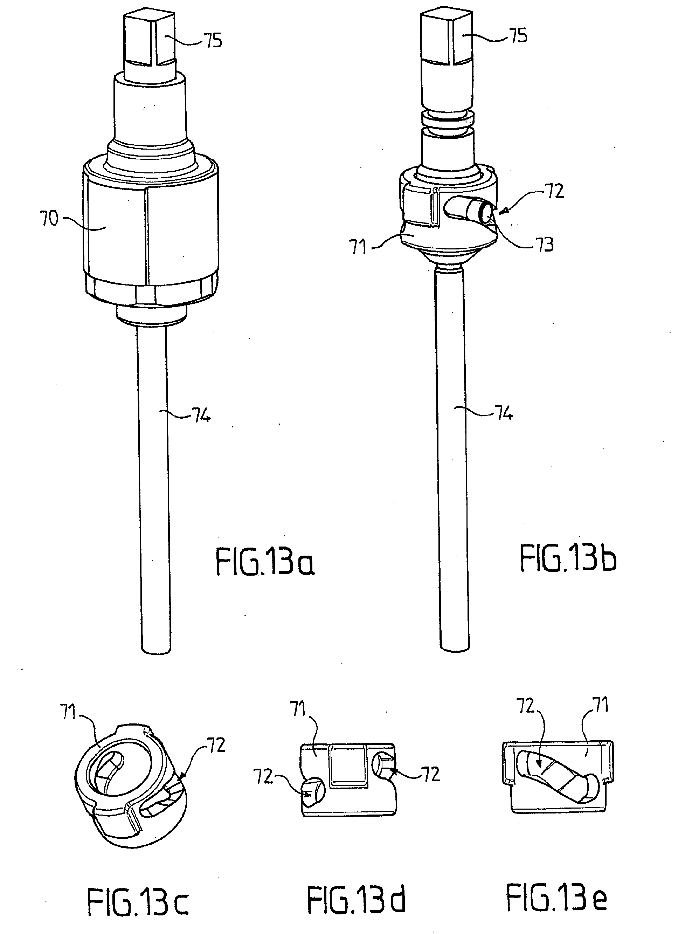

La Figure 11, en relation avec les Figures 13a, 13b, 13c, 13d, 13e, détaillent le robinet 7 avant compteur qui commande l'organe d'obturation 6 amont. Le robinet 7 comporte un corps 70 traversé par une tige de poussée 74 avec un moyen de manoeuvre 75 à pans type tête carrée. Le corps 70 comporte intérieurement une came 71 immobilisée dans le corps et concentrique à la tige de poussée 74. La came 71 comporte deux rainures 72 symétriques dans lesquelles circule une goupille 73 traversant la tige de poussée 74. Le moyen de manoeuvre 75 est opérationnel sur un quart de tour. La came est une pièce préférentiellement réalisée en matière plastique, injectée par exemple.

Chacune des rainures 72 présente trois zones de profils différents permettant de rendre sensiblement constant le couple à fournir pour ouvrir l'organe d'obturation et à fournir un indexage de fin de course. La première zone de pente faible correspond au début de l'ouverture de l'organe d'obturation 6 lorsque le différentiel de pression entre les faces dudit organe 6 est le plus grand. Une fois que l'ouverture s'est produite, les pressions tendent à s'égaliser de part et d'autre de l'organe 6, ce qui correspond à la seconde zone de pente plus importante. La troisième zone de pente inverse est un moyen permettant de sécuriser la position d'ouverture. Dans des modes moins évolués, la ou les rainures 72 ont seulement deux zones, voire une seule de pente constante. De même, on envisage d'autres types de robinets, par exemple multitours, pour commander l'organe d'obturation amont. Enfin, l'organe d'obturation 6 à bille 61, peut être remplacé par d'autres types de clapets ou soupapes pouvant être commandés. Sur la coupe Figure 11, on peut noter la présence de deux joints toriques destinés à assurer l'étanchéité entre l'extrémité amont 11 et le mamelon amont 21. Un joint torique est également mis en oeuvre dans le mamelon afin d'assurer l'étanchéité avec la cartouche 60 vissée. Deux joints toriques sont enfin mis en oeuvre au sein du corps de robinet 70 afin d'assurer l'étanchéité du moyen de manoeuvre 75. D'autres dispositions et moyens d'assurer l'étanchéité peuvent également être employés.

Ainsi, la forme particulière de la rainure provoque le déplacement vertical de la tige 74 lorsque le carré 75 est tourné d'un quart de tour. Il est à noter que cette disposition permet d'utiliser un profil parfaitement adapté à l'effort à exercer en facilitant la manoeuvre pour l'utilisateur, l'effort de poussée étant plus important au moment du décollement de la bille et plus faible ensuite. L'inclinaison de la rainure est donc plus faible au départ et augmentée ensuite. Ainsi, pour un couple de rotation sensiblement constant, les efforts transmis sont adaptés. Une disposition de verrouillage est également réalisée aux extrémités du profil, permettant l'indexation en position ouverte ou fermée de la manoeuvre.

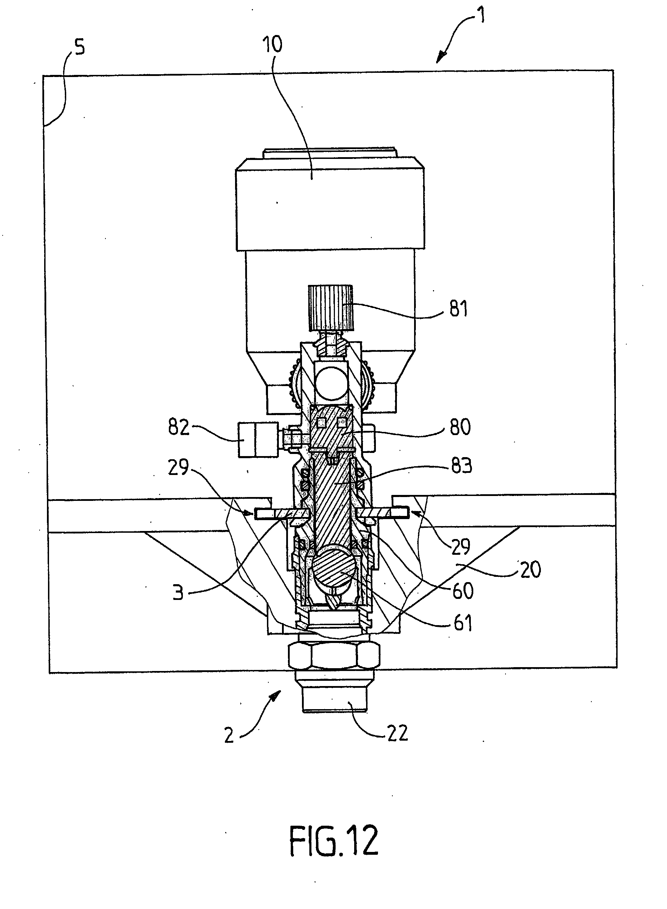

La Figure 12 correspond à une coupe B-B de la Figure 11. Un clapet anti-retour 80 est disposé entre une première purge 81 avant clapet et une seconde purge 82 après clapet suivant le sens de circulation normal du fluide vers l 'abonné. Le doigt 83 de commande fixe agit sur l'organe d'obturation 6 aval et sa bille 61. De préférence, l'organe d'obturation 6 aval comporte un moyen élastique de fermeture permettant de garantir l'étanchéité en absence de pression aval lorsque l'ensemble de comptage 10 est retiré. Dans d'autres formes de mise en oeuvre, le doigt 83 est omis, la pression du fluide amont étant suffisante pour ouvrir l'organe d'obturation. Toutefois dans ce dernier cas, une purge du circuit aval n'est plus possible et on peut supprimer la purge 82.

De préférence, l'organe d'obturation 6 amont comporte une bille 61, afin de réduire les pertes de charge. On peut mettre en oeuvre les dispositions suivantes :
- la bille 61 est constituée d'un matériau d'une densité inférieure à l'eau. La présence d'eau en amont provoque la remontée de la bille sur son siège et réalise l'obturation lorsque la tige de poussée 74 ne s'y oppose pas ;
- la bille est repoussée par le flux de l'eau ;
- une cage emprisonne la bille amont afin d'éviter les mouvements de la bille dans l'écoulement mais elle peut être remplacée par un ressort conique: cela permet en outre d'exercer une pression initiale de la bile sur son siège, même sans présence d'eau garantissant l'étanchéité y compris à la poussière ou aux impuretés. Un tel ressort peut également être utilisé dans l'organe d'obturation 6 aval.

Sur les Figures 11 et 12 une coque 5 est représentée et l'ensemble forme un regard ou borne. Le fond du regard ou borne correspond à la base 2. La forme de la coque est adaptée aux applications envisagées. La base forme un fond de cuve.

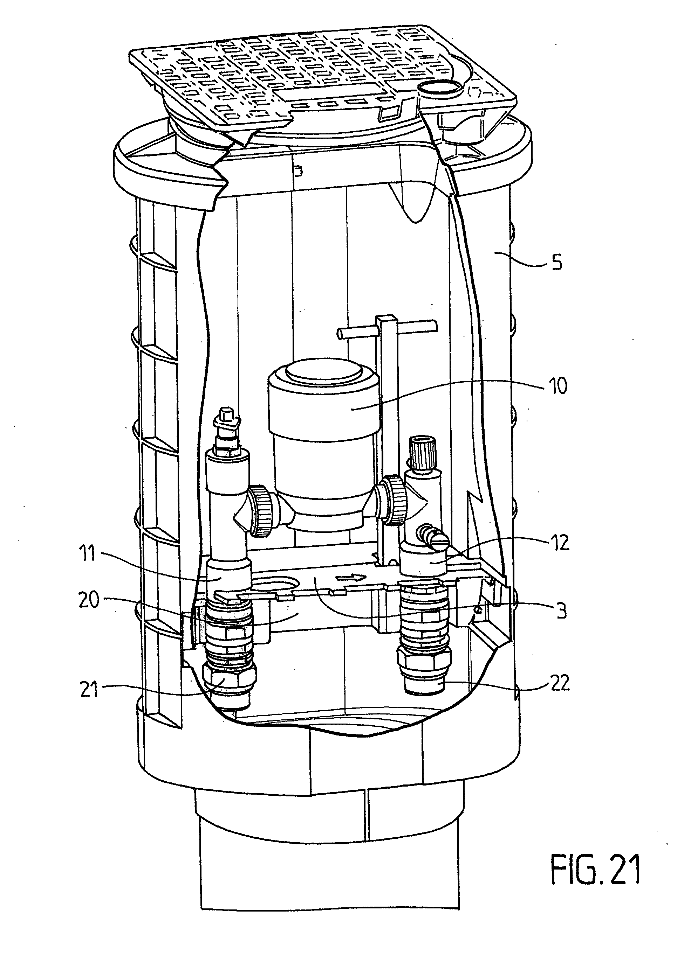

La Figure 21 représente un regard dont une partie de la coque a été découpée afin de visualiser le système de l'invention appliqué à un ensemble de comptage. Une partie de la base a également été mise afin de visualiser le titoir et les deux mamelons.

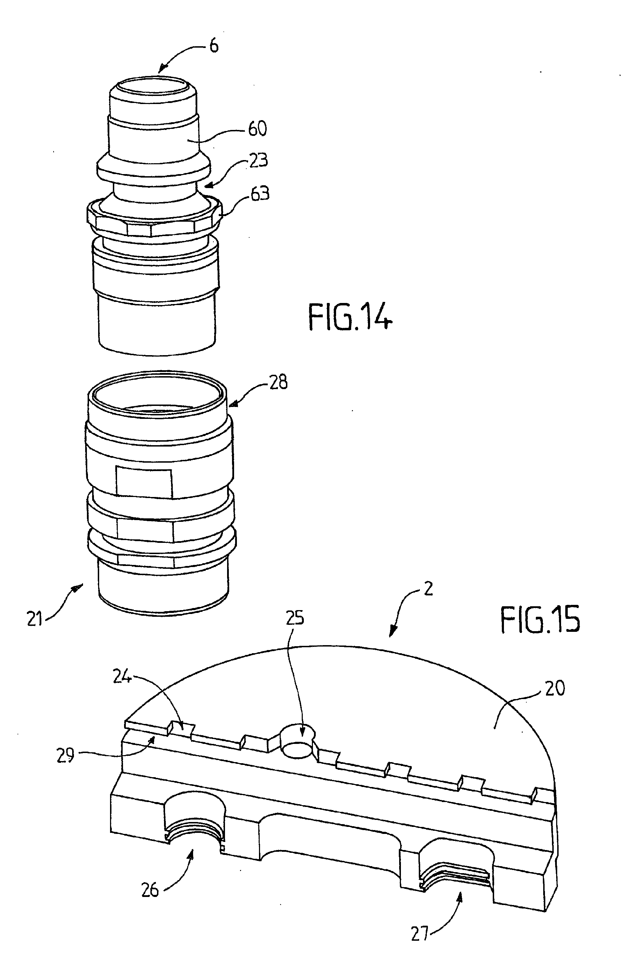

La Figure 14 concerne le mamelon et la cartouche 60 de l'organe d'obturation est démontée et séparée. Un moyen de prise 63, un six pans dans cet exemple, permet le vissage de la cartouche pour former le mamelon. Un filetage externe 28 permet le montage d'un tube permettant la maintenance de la cartouche alors que le fluide est sous pression dans le circuit.

Le support 20 représenté Figure 15 est en deux parties complémentaires venant au contact l'une de l'autre dans un plan passant par des orifices de passage amont 26 et aval 27 dans lesquels sont disposés les mamelons correspondants. Les mamelons sont maintenus fixes verticalement par un système d'empreinte et de contre empreinte qui autorise toutefois une translation horizontale dans le cas de l'orifice de passage aval 27 qui est oblong. Au moins l'un des deux mamelons de raccordement possède une liberté en translation grâce à un logement oblong ou orifice de passage dans le support 20, ce qui donne la possibilité de recevoir des compteurs de longueur variable, sans douille télescopique. Grâce à des chanfreins d'entrée sur les extrémités amont et aval du compteur qui facilitent leur introduction sur les mamelons, la distance séparant les 2 mamelons est ajustée lors de la mise en place. Cette disposition permet à l'ensemble de comptage de recevoir des compteurs de longueurs différentes sans nécessiter de douille télescopique. En effet, la norme de réalisation des compteurs prévoit une certaine tolérance de réalisation des longueurs et, dans une même gamme de compteur, les fournitures, notamment auprès de fabricants différents, amènent à des écarts importants de longueur.

Le support 20 est donc constitué de deux demi-parties, dont l'assemblage emprisonne les ensembles obturateurs ou mamelons amont et aval. Les empreintes destinées à les recevoir pourront être munies de rainures permettant le maintien des mamelons selon l'axe vertical tout en permettant la possibilité de translation nécessaire à l'indexation sur les longueurs de compteurs. Le montage est ainsi facilité et ne nécessite pas de pièce supplémentaire pour le maintien en position.

Les mamelons sont également immobilisés en rotation par des méplats complémentaires de surface des mamelons (voir Figures 5 à 10 par exemple) et des orifices de passages amont (non représenté) 26 et aval 27. Les deux parties complémentaires du support 20 sont maintenues solidaires entre elles par tout moyen classique dont réunion de deux demi-coques solidaires des deux parties du support et formant ainsi la coque externe 5.

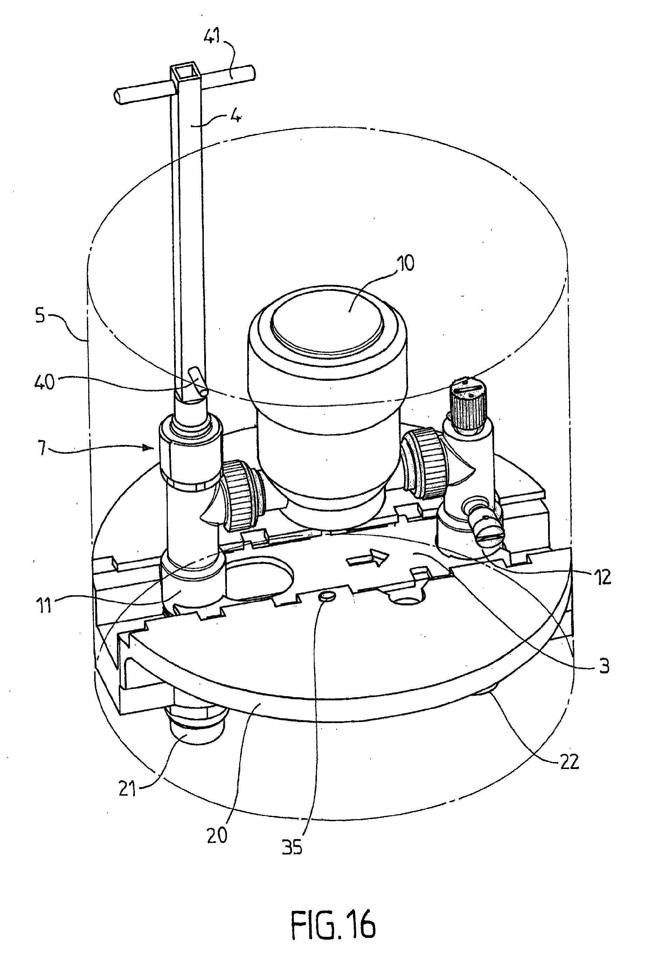

Figure 16, une clé de manoeuvre 4 est disposée sur le moyen de manoeuvre du robinet avant compteur 7 dans un regard. La même clé de manoeuvre 4 est utilisée pour le verrouillage et le déverrouillage du système et l'ouverture et la fermeture du robinet avant compteur. La clé de manoeuvre 4 permet donc la manipulation du robinet avant compteur et le déplacement du tiroir 3 ou glissière du moyen de fixation mobile à guillotine. Ainsi pour réaliser le déplacement en translation du tiroir 3, un outil est utilisé qui peut être le même que la clé de manoeuvre du robinet avant-compteur. Cet outil est constitué par un tube carré dont les dimensions intérieures sont celles du carré de manoeuvre 75 du robinet avant-compteur 7. Cette clé s'introduit dans un orifice circulaire d'engagement 25 réalisé dans le support 20 de la base 2 permettant un maintien axial et vertical borgne pendant la rotation de la clé. Un doigt de manoeuvre 40 disposé transversalement dans le tube réalise l'entraînement du tiroir 3 de la guillotine par l'intermédiaire d'une encoche 33. Ainsi la rotation de la clé provoque le déplacement du tiroir de la guillotine réalisant le blocage - déblocage de l'ensemble de comptage. Ce dispositif démultiplie l'effort à exercer et garanti une manipulation aisée. Dans le cas d'un effort de translation important à fournir, déblocage sous pression par exemple, le té de manoeuvre 41 d'extrémité de clé 4 et/ou la forme du tube permettent l'utilisation d'une clé ou d'une pince standard pour augmenter le bras de levier.

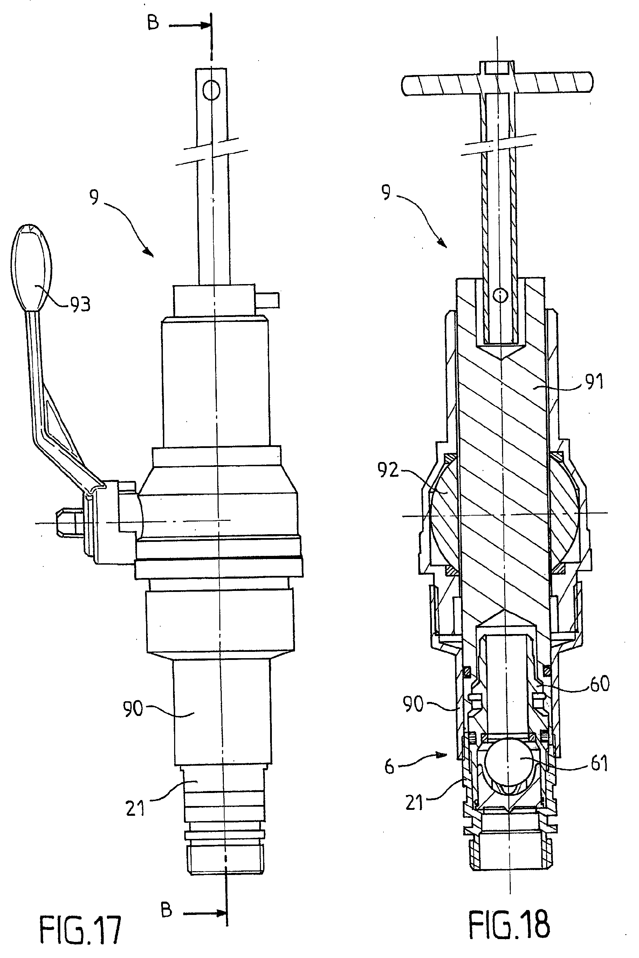

Figure 17, l'outil 9 de remplacement étanche à sas d'un organe d'obturation 6 est vissé sur un mamelon, le mamelon amont 21 à titre d'exemple. L'outil 9 est formé extérieurement d'un tube 90 comportant une sphère d'obturation 92 dont la rotation est commandée de l'extérieur par une poignée 93. La sphère est percée en son centre.

Figure 18, un système d'extractibilité 91 est disposé dans le tube 90 et vient en prise sur le moyen de prise 63 de l'organe d'obturation qui peut alors être dévissé du mamelon grâce à un té d'extrémité. Des moyens d 'étanchéité, joint torique sur le système d'extractibilité 91, permettent de travailler avec le fluide sous pression. L'outil 9 de remplacement de la cartouche d'obturation 60 permet de garantir une maintenance totale et très simple de l'ensemble. Il permet l'échange de l'organe d'obturation, de son siège, des joints d'étanchéité et du ressort de contact sous pression, sans interruption du fluide. Il est donc constitué par un tube 90, doté d'un taraudage à son extrémité et d'une gorge pour joint torique et à l'autre extrémité d'un sas, constitué par un robinet à tournant sphérique quart de tour par exemple. Un système d'extractibilité 91 du type arbre avec un diamètre extérieur ajusté sur le diamètre intérieur du tube et muni d'une étanchéité, à joint torique par exemple, est doté d'un dispositif d'accroche temporaire type bille à ressort qui permet de recevoir l'organe d'obturation à remplacer, équipé de ses composants internes, siège, bille, ressort, joint, et d'un système d'entraînement en rotation, type 6 pans par exemple, pour entraînement du moyen de prise 63 correspondant du mamelon à remplacer.

L'opération de maintenance consiste, dans un premier temps, à démonter l'ensemble de comptage puis à démonter le tiroir 3 de la guillotine par translation afin que les ergots 34 viennent en relation avec les échancrures 24 puis à visser le tube 90 sur le mamelon en fond de cuve et à ouvrir le sas par rotation de la sphère d'obturation.

Le démontage de l'ensemble de comptage peut nécessiter l'ouverture d'un verrou ou cadenas ou la destruction d'une boucle témoin, d'un rivet ou d'un clou à tête parapluie. Ces derniers moyens sont maintenus à la fois dans le support et dans le tiroir et bloquent le système en position de verrouillage. Il est donc nécessaire de les démonter pour déverrouiller le système et ils sont donc des témoins ou sécurités permettant de s'assurer de l'absence d'action intempestive ou de tentative de fraude dans le cas d'un ensemble de comptage. L'utilisation d'un rivet ou clou à tête parapluie ne nécessite qu'un orifice traversant la base 20 au niveau d'un ergot 34 du tiroir 3. Le clou à tête parapluie peut être introduit sans difficulté, la tête étant repliée, mais il ne peut être retiré sans être détruit car la tête est déployée après traversée de la base et du tiroir.

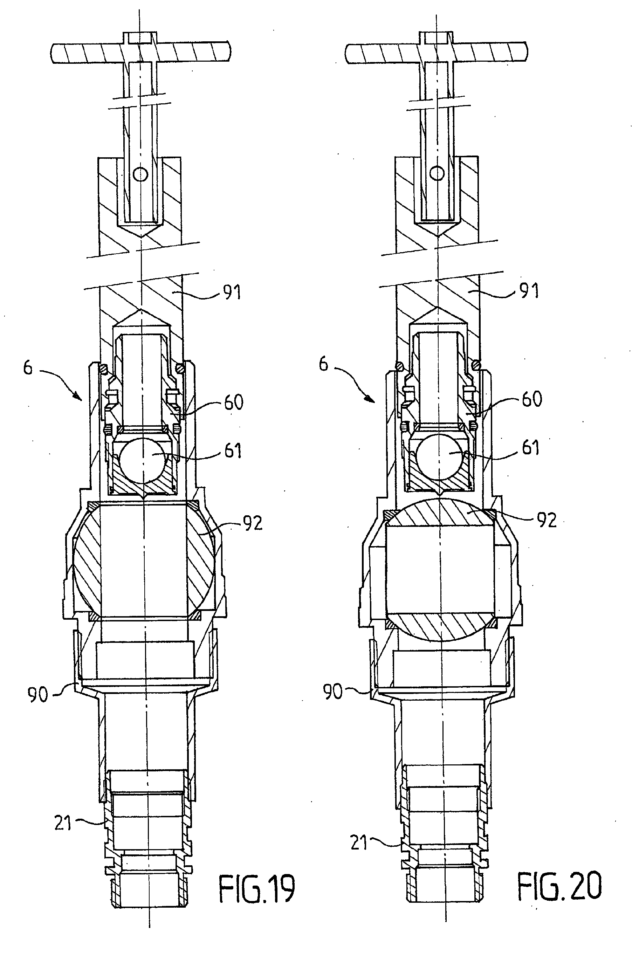

Figure 19, l'organe d'obturation 6 a été dévissé par rotation de l'arbre du système d'extractibilité 91, jusqu'à dégagement du filetage sur la douille du mamelon et il est remonté dans le tube au delà de la sphère 92. La pression de l'eau, en particulier en amont, aide à la remontée de l'ensemble arbre + mamelon et ses composants internes.

Figure 20, la sphère 92 est basculée afin de fermer le sas et il est alors possible d'extraire du tube 90 l'organe d'obturation 6. Dès que le sas est franchi et fermeture de celui-ci par rotation de la sphère d'obturation 92, l'organe d'obturation 6 peut-être remplacé au bout de l'arbre, hors d'eau puis l'ensemble est réinséré ou changé et remonté ou monté, selon des étapes inverses.

Ces opérations de maintenance sont possibles dans le système de l'invention et en particulier dans un regard sans qu'il soit nécessaire de couper le fluide en amont.

Comme précédemment indiqué, tout type de fluide peut être pris en charge avec le système décrit. De même un ou plusieurs circuits peuvent bénéficier de l'invention, par exemple un double comptage eau chaude et eau froide avec quatre mamelons et quatre extrémités qui peuvent être disposés en ligne ou parallèlement. Il est également possible d'associer un ou des faisceaux électriques. Ainsi un système mixte fluide et électrique peut être relié entre une entrée et une sortie par l'intermédiaire d'un module amovible. La connexion électrique ne peut concerner qu'une ou les deux extrémités et mamelon. On envisage en effet un compteur de fluide électronique ou tout autre organe à commande ou de mesure électrique et/ou électronique dont robinet à commande électrique dans le module amovible et donc avec un faisceau électrique devant également être connecté.

Enfin, à la place d'un fluide, des circuits électriques peuvent bénéficier de l'invention, les conduites étant remplacées par un ou plusieurs conducteurs. Il est ainsi possible de réaliser un système à ensemble de comptage électrique amovible qui peut être remplacé d'une manière extrêmement rapide et sans nécessiter la coupure de l'alimentation électrique d'amont. Dans le cas de câbles électriques ou de conduites de fluides, les mamelons et extrémités sont des éléments d'adaptation permettant le raccordement grâce à leur recouvrement partiel et l'engagement en commun du tiroir ou plaque mobile de la guillotine mobile dans une seconde direction perpendiculaire à la première.

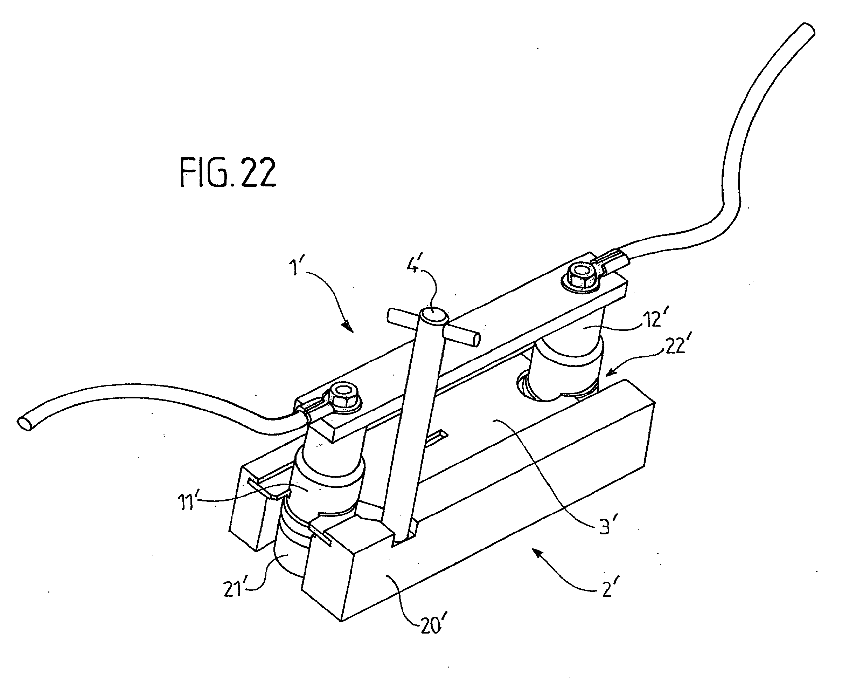

La Figure 22 représente un exemple d'application du système dé fixation à des circuits électriques. Les mamelons 21' et 22' reçoivent des conducteurs électriques non représentés. Les extrémitée 11' et 12' ont été disposées en interpénétration avec les mamelons 21' et 22' afin que les bords de verrouillage du tiroir 3' les bloquent entre-eux. Le tiroir est mobile en translation et sa manoeuvre est de préférence effectuée à la clé 4'. Les circuits électriques des mamelons sont mis en continuité avec les circuits des extrémités. Lorsque la partie amovible 1' est séparée de la base 2', des dispositifs d'isolation peuvent être activés afin que les circuits des extrémités et mamelons ne soient accessibles directement.

## Revendications

1. Système de fixation sur une base (2) d'un module amovible (1) comportant au moins deux extrémités (11,12) sur des mamelons (21,22) terminant des circuits, la base comportant un support (20) maintenant lesdits mamelons, le module étant fixé d'une manière amovible sur la base par un moyen de fixation mobile à au moins une position de verrouillage et une position de libération, l'extrémité et le mamelon correspondant s'interpénétrant, **caractérisé en ce que** le moyen de fixation mobile est une guillotine comportant un tiroir (3) mobile en translation par au moins un bord latéral dans un guide (29) du support, le tiroir comportant au moins un bord de verrouillage (30) par mamelon et extrémité s'interpénétrant, le bord de verrouillage s'engageant dans une rainure débouchante (13) et une gorge (23) en alignements dans l'épaisseur de l'extrémité et du mamelon afin de les bloquer entre eux en position de verrouillage.

2. Système. selon la revendication 1 **caractérisé en ce que** le tiroir (3) est une plaque comportant une encoche (33) le long d'un bord latéral, le support comporte un orifice d'engagement (25) borgne d'une clé de manoeuvre (4) à doigt de manoeuvre (40), le doigt s'engageant dans l'encoche et provoquant la translation du tiroir lors de la rotation de la clé.

3. Système selon la revendication 1 ou 2 **caractérisé en ce que** le tiroir est mobile en translation par deux bords latéraux opposés dans deux guides (29) du support et **en ce que** le tiroir comporte une rainure (31) à chacune de ses deux extrémités opposées libres, chacune des rainures comportant deux bords de verrouillage opposés (30), une des rainures vers l'intérieur du tiroir dans le sens du verrouillage débouchant dans un orifice (32) permettant en position de libération le libre passage de l'extrémité adaptée.

4. Système selon la revendication 3 **caractérisé en ce que** dans le cas d'un tiroir comportant un orifice (32), l'extrémité du module qui n'est pas destinée à traverser l'orifice comporte une collerette (14) de détrompage externe dont le diamètre est tel que ladite extrémité ne peut passer à travers ledit orifice empêchant ainsi un montage à l'envers du module sur la base.

5. Système selon la revendication 3 ou 4 **caractérisé en ce que** le tiroir est amovible et comporte des ergots (34) sur ses bords latéraux, les guides de glissière comportent des échancrures (24) et, pour séparation du tiroir, les ergots étant amenés en rapport avec les échancrures.

6. Système de fixation sur une base d'un module amovible (1), le module étant un ensemble de comptage (10) amovible à circuit fluidique comportant d'une part une base (2) avec un support (20), un mamelon de raccordement d'amont (21), un mamelon de raccordement d'aval (22) et, d'autre part, l'ensemble de comptage (10), les deux mamelon étant maintenus par le support, l'ensemble de comptage par une extrémité amont (11) et une extrémité aval (12) étant raccordé d'une manière étanche sur respectivement le mamelon amont et le mamelon aval, l'ensemble de comptage étant en outre fixé d'une manière amovible sur la base par un moyen de fixation mobile à au moins une position de verrouillage et une position de libération, l'extrémité et le mamelon correspondant s'interpénétrant, **caractérisé en ce qu'**il met en oeuvre le système de fixation de l'une quelconque des revendications précédentes .

7. Système selon la revendication 6 **caractérisé en ce que** les extrémités amont et aval de l'ensemble de comptage sont du type femelle et viennent en recouvrement des mamelons correspondant du type mâle, les extrémités comportent les rainures débouchantes (13), les mamelons comportent les gorges (23), et en position de verrouillage, les rainures et les gorges étant alignées et les bords de verrouillage (30) du tiroir (3) s'y engageant afin de bloquer les mamelons dans les extrémités.

8. Système selon la revendication 6 ou 7 **caractérisé en ce que** l'un au moins des mamelons (21,22) comporte un organe d'obturation (6) pouvant éventuellement être commandés pour ouverture par un moyen de commande de l'ensemble de comptage, ledit organe d'obturation étant normalement fermé lorsque l'ensemble de comptage est séparé de la base.

9. Système selon la revendication 8 **caractérisé en ce que** l'organe d'obturation au moins en amont est une cartouche (60) démontable comportant un siège et une bille (61) mobile dans une cage, la bille étant d'une densité inférieure à celle du fluide.

10. Système selon la revendication 8 **caractérisé en ce que** l'organe d'obturation au moins en amont est une cartouche (6) démontable comportant un siège et une bille mobile plaquée contre le siège par un moyen élastique (62) en l'absence d'action du moyen de commande correspondant.

11. Système selon la revendication 9 ou 10 **caractérisé en ce que** la cartouche est vissée dans le mamelon et comporte extérieurement un moyen de prise (63), ledit moyen de prise pouvant être un six pans, et **en ce que** le mamelon comporte un filetage extérieur pour vissage d'un tube (90) de maintenance étanche à sas, une clé adaptée au moyen de prise (63) et disposée dans le tube de maintenance pouvant dévisser et revisser la cartouche et la cartouche pouvant être extraite et replacée ou remplacée.

12. Système selon l'une quelconque des revendications 8 à 11 **caractérisé en ce que** l'organe d'obturation (6) du mamelon amont (21) est commandé par un robinet (7) d'avant compteur de l'ensemble de comptage, ledit robinet comportant un corps (70) de robinet, une came (71) dotée d'au moins une rainure (72) et immobilisée dans le corps de robinet, une goupille (73) circulant dans la rainure et solidaire d'une tige de poussée (74) dont une première extrémité est destinée à agit sur l'organe d'obturation amont et une seconde extrémité comporte un moyen de manoeuvre (75), une rotation quart de tour du moyen de manoeuvre permettant lorsque l'ensemble de comptage est installé sur la base, l'ouverture ou la fermeture de l'organe d'obturation suivant le sens de rotation.

13. Système selon la revendication 12 **caractérisé en ce que** la rainure comporte au moins deux zones (77,78,79) de profil différent afin qu'un utilisateur ait à produire un couple sensiblement constant lors de la rotation.

14. Système selon l'une quelconque des revendications 8 à 11 **caractérisé en ce que** l'extrémité aval (12) de l'ensemble de comptage comporte un doigt de commande (83) fixe entraînant l'ouverture de l'organe d'obturation (6) aval lorsque l'ensemble de comptage est installé sur la base.

15. Système selon l'une quelconque des revendications précédentes **caractérisé en ce que** chacun des mamelons (21,22) traverse le support (20) dans un orifice de passage (26,27) correspondant et que le support est formé de deux parties complémentaires solidarisées entre elles et venant au contact l'une de l'autre sensiblement le long d'un plan passant par les orifices de passage (26, 27) des mamelons, les mamelons étant maintenus par un moyen d'empreinte et contre empreinte complémentaires à la surface des orifices et des mamelons, ledit moyen fixant en hauteur le mamelon par rapport au support.

16. Système selon l'une quelconque des revendications précédentes **caractérisé en ce qu'**au moins un mamelon peut être translaté dans le support afin d'adapter la distance entre les mamelons à l'écartement entre les extrémités du module.

17. Système selon l'une quelconque des revendications précédentes **caractérisé en ce qu'**il comporte en outre une coque externe (5) destinée à englober le module et comportant à une première extrémité une ouverture d'accès et à une seconde extrémité un fond correspondant à la base.
